Europäisches Patentamt

European Patent Office

Office européen des brevets

(19)

(11) Numéro de publication : **0 046 095**
**B1**

(12)                     FASCICULE DE BREVET EUROPÉEN

(45) Date de publication du fascicule du brevet :
26.10.83

(51) Int. Cl.³ : **C 08 L 65/00, C 08 G 18/00**

(21) Numéro de dépôt : **81401140.9**

(22) Date de dépôt : **20.07.81**

(54) **Procédé de préparation de matières élastomères à base de polynorbornène et produit obtenu par ce procédé.**

(30) Priorité : 08.08.80 FR 8017514

(43) Date de publication de la demande :
**17.02.82 Bulletin 82/07**

(45) Mention de la délivrance du brevet :
**26.10.83 Bulletin 83/43**

(84) Etats contractants désignés :
**AT BE CH DE GB IT LI LU NL SE**

(56) Documents cités :
**FR A 1 536 305**
**FR A 2 302 312**

(73) Titulaire : **Société Chimique des Charbonnages**
**Tour Aurore Place des Reflets Cédex no 5**
**F-92080 Paris La Défense 2 (FR)**

(72) Inventeur : **Marbach, André**
**La Fontaine Sainte Geneviève**
**F-60550 Verneuil en Halatte (FR)**
Inventeur : **Stein, Claude**
**Lotissement des Basses Garennes Rue Paul Bert**
**F-60270 Gouvieux (FR)**

(74) Mandataire : **Rieux, Michel et al**
**C d F Chimie S.A. Service Propriété Industrielle Tour**
**Aurore - Cédex no. 5**
**F-92080 Paris la Defense 2 (FR)**

Jouve, 18, rue St-Denis, 75001 Paris, France

Procédé de préparation de matières élastomères à base de polynorbornène et produit obtenu par ce procédé

Il est connu que les polybicyclo-2,2,1-heptène-2 généralement appelés polynorbornènes obtenus par polymérisation du norbornène et de ses dérivés substitués possèdent une excellente compatibilité avec les plastifiants esters tels que le phtalate de dioctyle, sébaçate de dioctyle ou adipate de butyle et plus particulièrement avec les plastifiants pétroliers ou synthétiques de caractère aromatiques naphténiques et paraffiniques. La préparation et les propriétés du polynorbornène et de ses dérivés sont par exemple décrits dans les brevets français 1 535 460 du 12 janvier 1967 et dans le brevet français 1 536 305 du 27 juin 1967 et son addition 94 571 du 16 mai 1968.

Le taux d'absorption de ces plastifiants est particulièrement élevé avec les polynorbornènes en poudre finement divisée obtenus suivant le procédé décrit dans la demande de brevet français 74 0368 du 26 mars 1974. Ces polynorbornènes finement divisés ont une granulométrie comprise entre 0,01 et 2 mm, de préférence entre 0,01 et 0,8 mm. Ils peuvent absorber plus de 7 fois leur poids de plastifiant de type aromatique ou naphténique par simple mélange à température ambiante.

Il est généralement connu par le brevet français 230 2312 du 27 février 1975 qu'un choix adapté du taux et du type de plastifiant permet d'obtenir des mélanges de polynorbornène et de plastifiant qui conservent, après mise en contact des constituants pendant une durée suffisante, une fluidité telle que leur mise en œuvre est possible par simple coulée à température ambiante dans les moules, matrices ou conformateurs. La gélification se fait ensuite spontanément et progressivement 1 à 24 heures après la coulée. L'article fini peut alors être démoulé ou sorti de son conformateur. On peut par exemple mélanger à température ambiante 100 parties en poids de polynorbornène ayant une granulométrie comprise entre 0,01 et 0,5 mm vendu sous la marque NORSOREX F par CdF-Chimie avec 300 parties en poids d'un plastifiant naphténique pétrolier ou synthétique de moyenne ou basse densité tel que les huiles vendues sous la marque SOMIL-B par SHELL FRANCE, sous la marque PIONIER SRW-8 par HANSEN et ROSENTAL, sous la marque ENERTHENE 43 par BRITISH PETROLEUM ou sous la marque SUNTHENE 255, par SUNOIL CO. Le mélange obtenu se prête à la coulée pendant 2 à 6 minutes après mise en contact des constituants et il est totalement gélifié au bout de 1 à 48 heures à température ambiante.

Les masses gélifiées obtenues présentent de nombreux avantages. En particulier la résilience de rebond peut facilement être ajustée sur une large gamme. En effet elle varie selon le plastifiant utilisé et selon la quantité de plastifiant utilisée. Cependant ces masses n'étant pas réticulées la rémanence aux contraintes mécaniques, en particulier en compression, est souvent trop élevée. On améliore déjà la rémanence aux contraintes mécaniques en ajoutant au mélange, comme proposé dans le brevet français 230 2312 du 27 février 1975, des charges et des agents de vulcanisation tels que soufre, donneurs de soufre ou peroxydes de façon à établir dans la masse un réseau de réticulation tridimensionnel. Les charges et agents de vulcanisation sont en général incorporés par dispersion dans le plastifiant à raison de 1 à 10 parties en poids pour 100 parties de polynorbornène avant addition du plastifiant au polynorbornène.

La présente invention concerne un procédé de préparation de matières élastomères à base de polynorbornène dont la rémanence aux contraintes mécaniques est encore améliorée par rapport aux vulcanisats de polynorbornène tout en conservant la possibilité de régler la résilience de rebond.

La présente invention concerne un procédé de préparation d'une matière élastomère dans lequel on mélange à température ambiante le polynorbornène finement divisé avec un plastifiant de type ester ou huile paraffinique, aromatique ou naphténique caractérisé par le fait que l'on ajoute au mélange au moins un isocyanate, de préférence associé à un polyol.

En effet on a constaté que l'on améliore déjà la rémanence aux contraintes mécaniques de la matière élastomère à base de polynorbornène par addition d'isocyanates seuls mais que celle-ci est encore nettement améliorée si on associe à l'isocyanate un polyol.

Les isocyanates sont de préférence ceux utilisés pour la fabrication de polyuréthane. On peut citer par exemple le 4,4'-diphénylméthane diisocyanate (MDI), méthyl diisocyanate, les tolylène diisocyanates (TDI), le m-xylylènediisocyanate et le dianisidine diisocyanate et les mélanges de ces isocyanates, en particulier les mélanges de TDI et MDI.

La quantité d'isocyanate ajoutée varie de 15 à 750 parties en poids pour 100 parties de polynorbornène et de préférence de 20 à 500 parties en poids. Pour une quantité d'isocyanate inférieure à 15 parties l'effet de l'addition d'isocyanate n'est pas notable.

Les polyols associés à l'isocyanate sont également ceux généralement utilisés dans la fabrication de polyuréthane. Ce sont en particulier des polyéther polyols et/ou des polyols naturels ou synthétiques. Comme polyols on peut citer le glycol, le glycérol, le sucrose, l'amidon. Comme polyéther polyols on peut citer les dérivés de l'oxyde de propylène avec le glycol, le glycérol, le triméthylolpropane, le 1,2,6-hexane triol, le pentaerythritol ou le sorbitol ou les dérivés de l'oxypropylène -b-oxyéthylène avec le glycol, le triméthylolpropane ou l'éthylène diamine.

Les polyols sont ajoutés à raison de 10 à 1 500 parties, et de préférence de 50 à 750 parties en poids pour 100 parties en poids de polynorbornène.

La présence d'isocyanate seul améliorant la rémanence de la masse élastomère aux contraintes mécaniques on peut penser qu'il y a réticulation bien que l'on ne connaisse pas le mécanisme de réaction. L'association d'un isocyanate à un polyol est une technique bien connue pour la fabrication de polyuréthanes. Dans ces conditions on peut penser qu'il y a à la fois réticulation du polynorbornène et formation de polyuréthane.

On pourra le cas échéant incorporer également au mélange, des activateurs de réticulation, des agents de dégazage, des agents protecteurs, des ignifugeants, des agents gonflants ou encore des colorants. On peut également ajouter des charges telles que craie, kaolin, baryte, poudres magnétiques ou abrasives.

Pour réaliser l'invention on opère comme suit :

On introduit dans le plastifiant l'isocyanate, le polyol, les activateurs, les agents de dégazage, des colorants et éventuellement des charges et d'autres additifs. Cette opération est réalisée à température ambiante. On peut également ajouter le plastifiant au mélange d'isocyanate et polyol.

On introduit ensuite sous agitation le polynorbornène dans le mélange de plastifiant, isocyanate et polyol.

On obtient un gel que l'on coule dans un moule ou un conformateur toujours à température ambiante. La prise en masse du mélange intervient généralement au bout de 15 minutes à 3 heures à 20-25 °C et la réticulation complète au bout de 24 heures à 72 heures. Le démoulage des articles est généralement possible au bout de 2 à 24 heures. Si on désire accélérer les processus de gélification et de réticulation on peut chauffer le mélange après la coulée, par exemple à une température de 50 à 100 °C pendant 5 minutes à 1 heure.

Le produit obtenu peut être utilisé comme revêtement de sols industriels ou d'habitations, comme tapis de sport, joint d'étanchéité dans le bâtiment, le génie civil ou la marine, pour le remplissage des pneumatiques, pour la fabrication de structures et articles de confort et de sécurité, pour l'isolation électrique et thermique, pour la réalisation de matrices et moules souples ou de meules abrasives.

Les exemples donnés ci-dessous permettront de mieux comprendre l'invention.

## Exemple 1

Dans l'essai 1 on a préparé un polynorbornène plastifié et réticulé à l'aide de l'agent de réticulation présentant la composition suivante :

| | |
|---|---|
| ZnO | 5 parties |
| Soufre | 2 parties |
| Ethylxanthate de Zn | 1 partie |
| Dithiocarbamate | 2 parties |
| (vendu sous la marque BUTYL EIGHT par UNIROYAL) | |

Dans l'essai 3 on a préparé un polyuréthane par action d'un isocyanate sur un polyalcool en présence d'un activateur. Dans tous les essais le polynorbornène utilisé est celui vendu sous la marque NORSOREX F par CdF-Chimie, le plastifiant est celui vendu sous la marque PIONIER SRW8 par HANSEN et ROSENTAL, l'isocyanate est un produit à base de MDI vendu sous la marque RHENODUR C110 par RHEINCHEMIE et le polyol est un mélange de polyéther et de glycol vendu sous la marque RHENO-PHENE E123 par RHEINCHEMIE. L'activateur est la butylamine. Dans tous les essais on prépare le gel en mélangeant au plastifiant l'isocyanate, le polyol et éventuellement l'activateur puis en ajoutant le polynorbornène au produit obtenu.

On effectue ensuite les mesures suivantes.

Le temps de coulée en minute : temps au bout duquel on constate visuellement que le mélange ne peut plus être versé,

Le temps de gel : temps estimé visuellement au bout duquel le mélange ne présente plus de phase liquide,

La dureté Shore A selon la norme ASTM D 676.

La résilience de rebond selon la norme DIN 53-512.

Les modules de compression mesurés sur une machine INSTRON à une vitesse de compression de 1 cm/mn sur des plots de 27 mm de diamètre et 13,5 mm d'épaisseur.

Les résultats sont donnés dans le tableau ci-joint dans lequel les proportions sont données pour 100 parties de NORSOREX sauf dans l'essai 3 où il n'y a pas de NORSOREX.

## Exemple 2

On opère comme dans l'exemple précédent en mélangeant pour 100 parties de NORSOREX F et 300 parties de plastifiant PIONIER SRW 8 500 parties de RHENODUR 110 comme isocyanate et 1 000 parties de RENOPHENE E123 comme polyol. Dans un des essais on ajoute 20 parties de butylamine comme activateur et dans l'autre 10 parties.

Les mélanges obtenus sont des masses spongieuses qui à la main ont une certaine rigidité.

Tableau

| Numéro d'essai | Plasti- fiant | Iso- cyanate | Polyol. | Acti- vateur | Coulée mn | Gel mn | Mesure (jours) | Dureté Shore A | Résilience de rebond % | Module de compression kg/cm² | | |
|---|---|---|---|---|---|---|---|---|---|---|---|---|
| | | | | | | | | | | 20 | 30 | 40 |
| 1 | 300 | — | — | — | 3 | 5 | 3 / 15 | 10 | 68 | 1,0 / 1,1 | 2,0 / 2,4 | 3,8 / 4,5 |
| 2 | 300 | — | — | — | 2 | 4 | 3 / 15 | 12 | 70 | 1,2 / 1,6 | 2,4 / 2,9 | 4,3 / 4,8 |
| 3 | — | 25 | 100 | 1,3 | 3 | 10 | 3 / 15 | 28 | 30 | 2,5 / 2,5 | 4,3 / 4,4 | 7,9 / 7,7 |
| 4 | 300 | 50 | — | — | 3 | 6 | 3 / 15 | 12 / 20 | 70 / 58 | 1,2 / 1,6 | 2,0 / 2,9 | 3,8 / 5,9 |
| 5 | 300 | 25 | 100 | — | 5 | 10 | 15 | 20 | 50 | 1,4 | 3,1 | 6,2 |
| 6 | 300 | 25 | 100 | 1 | 5 | 10 | 3 | 18 | 55 | 1,3 | 2,7 | 5,5 |
| 7 | 300 | 50 | 100 | — | 4 | 15 | 3 | 22 | 52 | 2,0 | 3,9 | 7,6 |
| 8 | 300 | 50 | 100 | 1 | 3 | 5 | 2 / 15 | 25 | 55 | 2,8 / 2,9 | 4,9 / 5,2 | 8,2 / 9,1 |
| 9 | 300 | 50 | 100 | 2 | 3 | 5 | 2 / 15 | 25 | 57 | 2,2 / 2,7 | 4,0 / 5,2 | 6,8 / 9,1 |
| 10 | 450 | 50 | 100 | — | 10 | 25 | 3 / 15 | 12 | 48 | 1,3 / 1,5 | 2,4 / 2,7 | 4,7 / 5,1 |

## Revendications

1. Procédé de préparation de matières élastomères à base de polynorbornène dans lequel on mélange à température ambiante le polynorbornène finement divisé avec un plastifiant de type ester ou huile paraffinique, aromatique ou naphténiques caractérisé par le fait que l'on ajoute au mélange au moins un isocyanate.

2. Procédé selon la revendication 1 dans lequel l'isocyanate est associé à un polyol.

3. Procédé selon les revendications 1 ou 2 dans lequel la quantité d'isocyanate ajoutée est comprise entre 15 et 750 parties en poids pour 100 parties de polynorbornène.

4. Procédé selon la revendication 3 caractérisé par le fait que la quantité d'isocyanate ajoutée est comprise entre 20 et 500 parties en poids pour 100 parties de polynorbornène.

5. Procédé selon l'une quelconque des revendications 1 à 4 caractérisé par le fait que les polyols sont ajoutés à raison de 10 à 1 500 parties en poids pour 100 parties de polynorbornène.

6. Procédé selon la revendication 5 caractérisé par le fait que les polyols sont ajoutés à raison de 50 à 750 parties en poids pour 100 parties de polynorbornène.

7. Procédé selon l'une quelconque des revendications 1 à 6 caractérisé par le fait que l'on prépare un mélange de plastifiant, isocyanate et polyol à température ambiante et que l'on ajoute le polynorbornène dans le mélange obtenu.

8. Produit obtenu selon l'une quelconque des revendications 1 à 7.

## Claims

1. Method of preparing elastomeric materials based on polynorbornene, in which the finely divided polynorbornene is mixed at ambient temperature with a plastifying agent of the ester or paraffinic, aromatic or naphthenic oil type, characterised in that at least one isocyanate is added to the mixture.

2. Method according to claim 1, in which the isocyanate is associated with a polyalcohol.

3. Method according to claim 1 or 2, in which the quantity of added isocyanate is between 15 and 750 parts by weight per 100 parts of polynorbornene.

4. Method according to claim 3, characterised in that the quantity of added isocyanate is between 20 and 500 parts by weight per 100 parts of polynorbornene.

5. Method according to any one of claims 1 to 4, characterised in that the polyalcohols are added in a ratio of 10 to 1,500 parts by weight per 100 parts of polynorbornene.

6. Method according to claim 5, characterised in that the polyalcohols are added in a ratio of 50 to 750 parts by weight per 100 parts of polynorbornene.

7. Method according to any one of claims 1 to 6, characterised in that a mixture of plastifying agent, isocyanate and polyalcohol is prepared at ambient temperature and that the polynorbornene is added to the obtained mixture.

8. Product obtained according to any one of claims 1 to 7.

**Ansprüche**

1. Verfahren zur Herstellung von Elastomermaterialien auf Basis von Polynorbornen, bei welchem man bei Umgebungstemperatur feinteiliges Polynorbornen mit einem Weichmacher von der Art eines paraffinischen, aromatischen oder naphthenischen Esters oder Öls vermischt, dadurch gekennzeichnet, daß man der Mischung mindestens ein Isocyanat beigibt.

2. Verfahren nach Anspruch 1, bei welchen das Isocyanat in Verbindung mit einem Polyol beigegeben wird.

3. Verfahren nach Anspruch 1 oder 2, bei welchem die beigegebene Menge an Isocyanat zwischen 15 und 750 Gewichtsteile auf 100 Teile Polynorbornen beträgt.

4. Verfahren nach Anspruch 3, dadurch gekennzeichnet, daß die beigegebene Menge an Isocyanat zwischen 20 und 500 Gewichtsteile auf 100 Teile Polynorbornen beträgt.

5. Verfahren nach irgendeinem der Ansprüche 1 bis 4, dadurch gekennzeichnet, daß die Polyole in einer Menge von 10 bis 1 500 Gewichtsteilen auf 100 Teile Polynorbornen beigegeben werden.

6. Verfahren nach Anspruch 5, dadurch gekennzeichnet, daß die Polyole in einer Menge von 50 bis 750 Gewichtsteilen auf 100 Teile Polynorbornen beigegeben werden.

7. Verfahren nach irgendeinem der Ansprüche 1 bis 6, dadurch gekennzeichnet, daß man eine Mischung aus Weichmacher, Isocyanat und Polyol bei Umgebungstemperatur herstellt und das Polynorbornen der erhaltenen Mischung beigibt.

8. Nach irgendeinem der Ansprüche 1 bis 7 hergestelltes Produkt.